# EUROPEAN PATENT APPLICATION

(11) **EP 1 650 473 A1**
(43) Date of publication of application: **26.04.2006**
(21) Application number: 04025086.2
(22) Date of filing: 21.10.2004
(51) Int. Cl.: F16H 3/091

(54) **Transmission gearbox for motor vehicle**

(71) Applicant: Kwang Yang Motor Co., Ltd., Kaohsiung City (TW)
(72) Inventor: Ho, Chao-Chang, Fongshan City Kaohsiung County (TW)
(74) Representative: Haft, von Puttkamer, Berngruber, Czybulka

(57) **Abstract**

The present invention is to provide a transmission gearbox comprising a gearshift shifting mechanism formed by a gearshift hub (45), a first push rod (441), a second push rod (442), a first sliding block (434) and a second sliding block (422) to transfer engine driving force from a driven shaft (41) through a linking shaft (42) and/or a main shaft (43) to an output shaft (62), wherein the first sliding block is slidably mounted on the main shaft; the main shaft has mounted thereon a first forward gear (433), a first low-range gear (432), and a transmission gear (431); the second sliding block is slidably mounted on the linking shaft; the linking shaft has mounted thereon a back gear (421) a second low-range gear (424), a second forward gear (425), and a drive bevel gear (426), the back gear being mounted on the linking shaft at one side relative to the second sliding block, the second low-range gear, second forward gear and drive bevel gear at the linking shaft being disposed at one side relative to the second sliding block opposite to the back gear.

## Description

### BACKGROUND OF THE INVENTION

### 1. Field of the Invention

The present invention relates to a transmission gearbox, and more particularly to an improved structure of transmission gearbox for use in a motor vehicle as to eliminate the problem of difficulty in adjusting the presence of a backlash of the transmission bevel gear in the prior art and achieve the purposes of easy maintenance and assembly and reducing the number of parts within the gearbox.

### 2. Description of Related Art

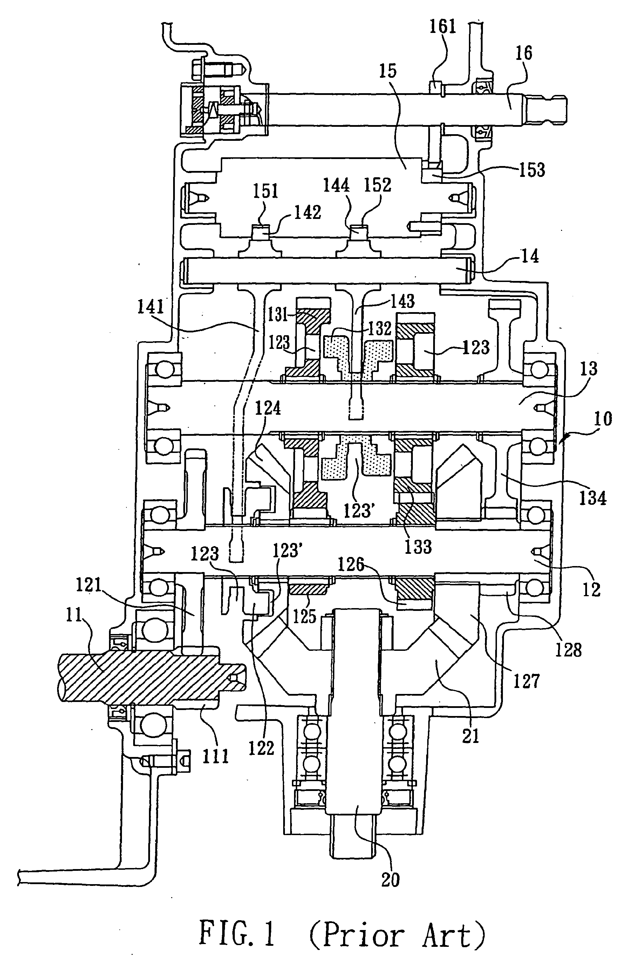

FIG 1 shows a transmission gearbox for use in a motor vehicle according to the prior art. According to this design, the transmission gearbox **10** comprises a driven shaft **11** adapted to receive the driving force of the engine through a belt transmission mechanism (not shown), a transmission gear **111,** and a linking shaft **12** adjacent to the driven shaft **11.** The linking shaft **12** has mounted thereon in proper order a first gear **121,** a back sliding block **122,** a back bevel gear **124,** a second gear **125,** a third gear **126,** a forward bevel gear **127,** and a fourth gear **128.** The first gear **121** is meshed with the transmission gear **111.** The back sliding block **122** and the back bevel gear **124** each have a coupling hole **123** or **123'.** The back sliding block **122** has a toothed portion (not shown) meshed with the linking shaft **12** such that the back bevel gear **124** and the forward bevel gear **127** and the fourth gear **128** run idle during rotation of the linking shaft **12.**

Further, a main shaft **13** is provided at the other side of the linking shaft **12.** The main shaft **13** has mounted thereon in proper order a low-range gear **131,** a corresponding sliding block **132,** a forward gear **133,** and a transmission gear **134.** The low-range gear **131,** the sliding block **132** and the forward gear **133** each have a coupling hole **123** or **123'.** The sliding block **132** has a toothed portion (not shown) meshed with the main shaft **13** such that the second gear **125** at the linking shaft **12** meshes with the forward gear **133** at the main shaft for synchronous rotation and the low-range gear **131** and the forward gear **133** run idle on the main shaft **13** before connection of the sliding block **132** to the coupling hole **123** of the forward gear **133.**

Further, a first push rod **141** and a second push rod **142** are respectively fastened to the coupling hole **123** of the back sliding block **122** and the coupling hole **123'** of the sliding block **132.** The first push rod **141** and the second push rod **142** are respectively mounted on a shaft **14,** each having the other end terminating into a respective tip **142** or **144** that is respectively inserted into a respective sliding groove **151** or **152** at a gearshift hub **15** for moving a gearshift lever **16** into the desired gearshift position.

Further, the forward bevel gear **127** at the linking shaft **12** is meshed with a transmission bevel gear **21** at the output shaft **20.**

When shifting the gearshift lever **16** to the back gearshift position, the drive gear **161** at the gearshift lever **16** moves a driven gear **153** at the gearshift hub **15.** At this time, the first push rod **141** pushes the back sliding block **122** into the coupling hole **123'** of the back bevel gear **124,** for enabling the driving force to be transferred from the transmission gear **111** at the driven shaft **11** to the linking shaft **12.** Because the back bevel gear **124** is sleeved onto the linking shaft **12.** Rotating the linking shaft **12** does not cause the back bevel gear **124** to rotate. At this time, the back sliding block **122** drives the linking shaft **12** to rotate, and therefore the engine driving force is transferred through the back bevel gear **124** to the transmission bevel gear **21** and the output shaft **20** and then to the rear wheels of the motor vehicle for backward movement.

According to this design, the transmission bevel gear **21** at the output shaft **20** is adapted to mesh with the back bevel gear **124** and the forward bevel gear **127.** During gear transmission between the transmission bevel gear **21** and the back bevel gear **124**/forward bevel gear **127,** a noise is produced due to the presence of a backlash. Further, the processing precision requirement of these bevel gears is critical. Loose engagement between the transmission bevel gear **21** and the back bevel gear **124**/forward bevel gear **127** produces a high noise during transmission.

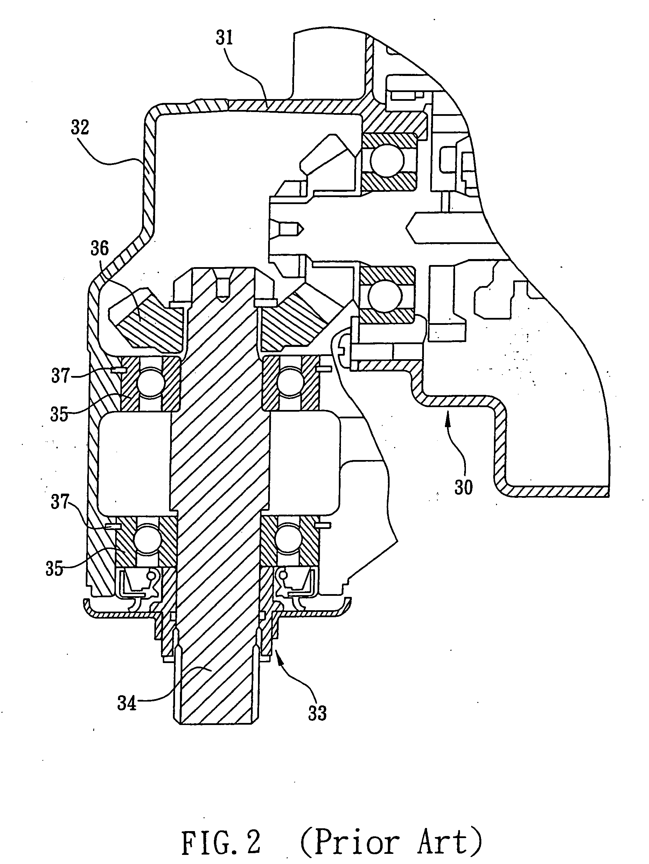

FIG 2 shows another structure of transmission gearbox according to the prior art. According to this design, the transmission gearbox **30** comprises a gearbox body **31** and a gearbox cover **32.** The gearbox body **31** and the gearbox cover **32** define a space for accommodating an output shaft set **33,** which is comprised of an output shaft **34,** a bearing **35,** and a transmission bevel gear **36.** A C-shaped clamp **37** is installed in the transmission gearbox to secure the bearing **35** to the inside of the transmission gearbox between the gearbox body **31** and the gearbox cover **32.** The positioning precision of the C-shaped clamp **37** is also critical. If the C-shaped clamp **37** is not accurately installed in position between the gearbox body **31** and the gearbox cover **32,** a big backlash will be produced at the transmission bevel gear **36,** thereby resulting in a high noise during transmission operation of the transmission gearbox.

### SUMMARY OF THE INVENTION

The present invention has been accomplished under the circumstances in view. It is therefore the main object of the present invention to provide a transmission gearbox, which eliminates the drawbacks of the aforesaid prior art designs. According to the present invention, the transmission gearbox comprises a gearshift hub, a first push rod, a second push rod, a first sliding block, a second sliding block, a driven shaft, a linking shaft, a main shaft, and an output shaft, the gearshift hub and the first push rod and the second push rod and the first sliding block and the second sliding block forming a gearshift shifting mechanism to transfer engine driving force from the driven shaft through the linking shaft and the main shaft to the output shaft, wherein: the first sliding block is slidably mounted on the main shaft; the main shaft has mounted thereon a forward gear, a low-range gear, and a transmission gear; the second sliding block is slidably mounted on the linking shaft; the linking shaft has mounted thereon a back gear, a low-range gear, a forward gear, and a drive bevel gear, the back gear being mounted on the linking shaft at one side relative to the second sliding block, the low-range gear, forward gear and drive bevel gear at the linking shaft being disposed at one side relative to the second sliding block opposite to the back gear. Further, the transmission gearbox comprises a gearbox body and gearbox cover covering the gearbox body. The gearbox cover defines therein a receiving chamber, which accommodates the output shaft, which has a driven bevel gear fixedly mounted thereon and meshed with the drive bevel gear. Further, the gearbox cover has a detachable lid for easy access to the drive bevel gear at the linking shaft. Further, the gearbox has a mounting hole disposed in communication with the receiving chamber and accommodating an actuation rod, which has a first end, a worm fixedly mounted on the first end and meshed with a toothed portion at one end of the linking shaft, and a second end connected to a mileage counter through a cable for driving the mileage counter to count upon rotary motion of the actuation rod with the linking shaft.

The invention achieves the following advantages:
1. The invention eliminates the noise problem due to the presence of a backlash between the transmission bevel gear and the back bevel gear/forward bevel gear as encountered in the prior art design.
2. By means of the detachable lid at the gearbox cover, a maintenance engineer is easily accessible to the drive bevel gear at the linking shaft.
3. The gearbox cover defines therein a receiving chamber for quick installation of the output shaft with a screw. Because the installation of the output shaft according to the present invention eliminates the use of a C-shaped clamp, the installation procedure of the output shaft is simple, saving much labor and installation time.
4. The gearbox has a mounting hole disposed in communication with the receiving chamber for accommodating an actuation rod for rotating a mileage counter cable to drive a mileage counter to start counting upon rotary motion of the linking shaft.

The above and other objects, features and advantages of the present invention will become apparent from the following detailed description taken in conjunction with the accompanying drawings.

### BRIEF DESCRIPTION OF THE DRAWINGS

FIG 1 is a schematic drawing of a transmission gearbox according to the prior art, showing the gearshift lever shifted to the back gearshift position.
FIG 2 is a schematic drawing of a part of another structure of transmission gearbox according to the prior art.
FIG 3 is a schematic drawing of a transmission gearbox according to the present invention, showing the gearshift lever shifted to the forward gearshift position.
FIG 4 is similar to FIG 3 but showing the gearshift lever shifted to the back gearshift position.
FIG 5 is similar to FIG 3 but showing the gearshift lever shifted to the low-range gearshift position.
FIG 6 is a schematic drawing of the present invention, showing the output shaft set separated from the transmission gearbox.

### DETAILED DESCRIPTION OF THE PREFERRED EMBODIMENT

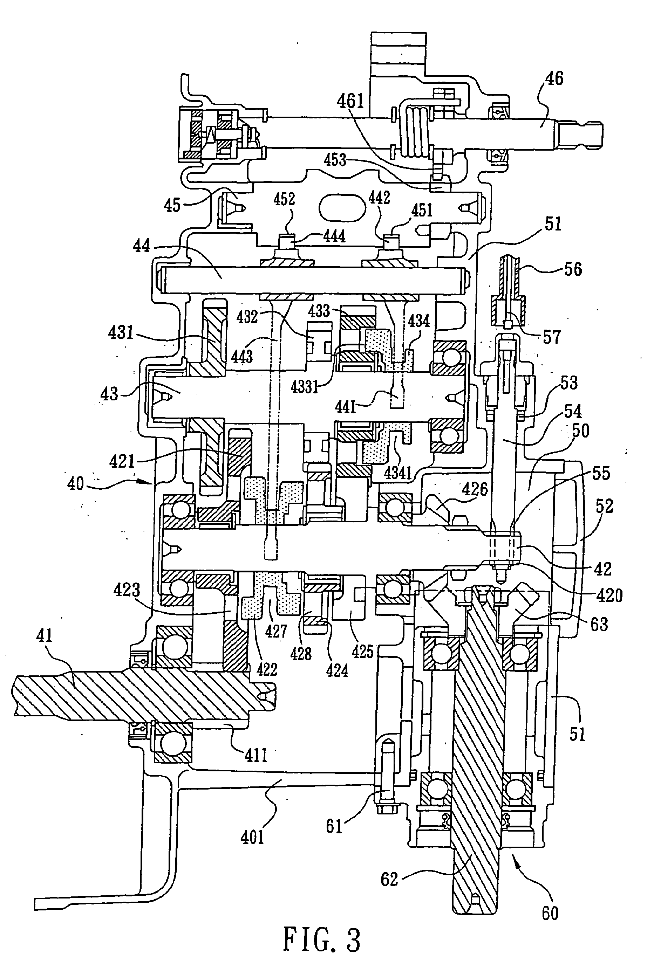

Referring to FIG. 3, a transmission gearbox **40** is shown comprising a box body **401** gearbox covered with a gearbox cover **51,** a driven shaft **41** pivotally mounted in the box body **401** for receiving driving power from an engine (not shown) through a belt transmission mechanism (not shown), a transmission gear **411** formed integral with the periphery of the driven shaft **41,** and a linking shaft **42** arranged in parallel to the driven shaft **41.** The linking shaft **42** has mounted thereon in proper order a back gear **421,** a second sliding block **422,** a low-range gear **424,** a forward gear **425,** and a drive bevel gear **426.** The back gear **421** is fixedly mounted on the linking shaft **42** and meshed with the transmission gear **411.** The back gear **421**, second sliding block **422** and the low-range gear **424** each have a coupling hole **423**, **427**, or **428**. The second sliding block **422** has a toothed portion (not shown) meshed with a toothed portion (not shown) of the linking shaft **42.** During rotation of the linking shaft **42,** the back gear **421** and the low-range gear **424** run idle.

A main shaft **43** is mounted in the box body **401** and arranged in parallel to the linking shaft **42** at one side opposite to the driven shaft **41.** The main shaft **43** has mounted thereon in proper order a transmission gear **431,** a low-range gear **432,** a forward gear **433,** and a first sliding block **434.** The transmission gear **431** is meshed with the transmission gear **411** at the driven shaft **41** (It is not visible from FIG 3). The forward gear **433** and the first sliding block **434** each have a coupling hole **4331** or **4341.** The first sliding block **434** has a toothed portion (not shown) meshed with a toothed portion (not shown) of the main shaft **43.** The low-range gear **432** is meshed with the low-range gear **424** at the linking shaft **42.** The forward gear **433** is meshed with the forward gear **425** at the linking shaft **42.** During rotation of the main shaft **43,** the forward gear **433** runs idle.

A first push rod **441** and a second push rod **442** are respectively fastened to the coupling hole **4341** of the first sliding block **434** and the coupling hole **427** of the second sliding block **422.** The first push rod **441** and the second push rod **442** each have the other end terminating into a respective tip **442** or **444** that is respectively inserted into a respective sliding groove **451** or **452** at a gearshift hub **45** for moving a gearshift lever **46** into the desired gearshift position.

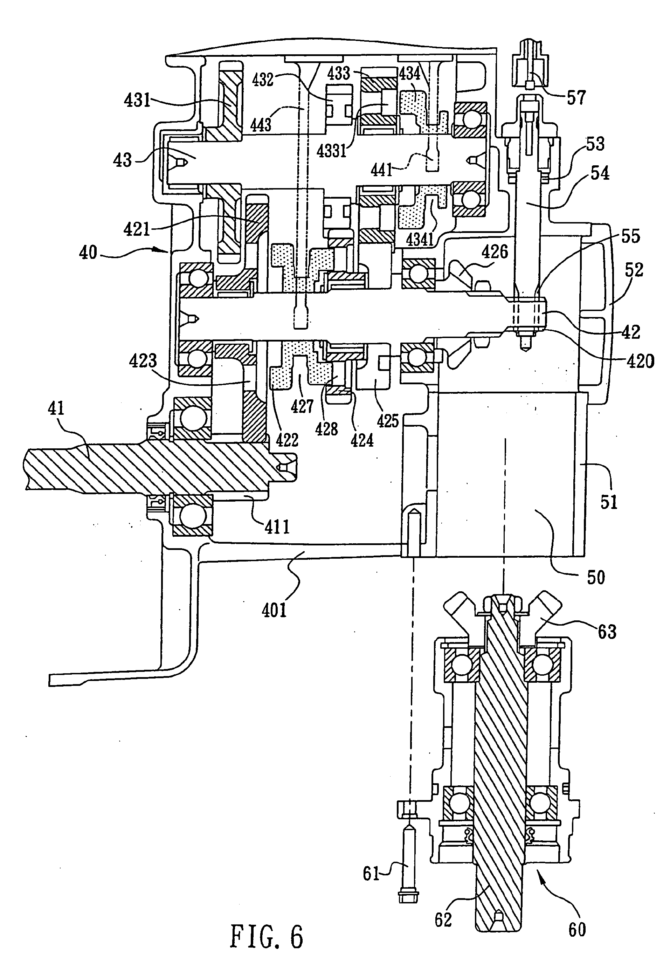

Referring to FIG 6 and FIG 3 again, the transmission gearbox **40** has a receiving chamber **50** around the drive bevel gear **426** at the linking shaft **42.** The receiving chamber 50 is directly formed in the gearbox cover **51** for quick installation of an output shaft set **60.** The output shaft set **60** is fastened to the gearbox cover **51** with a fastening member **61** (for example, screw). The output shaft **62** of the output shaft set **60** is mounted with a driven bevel gear **63**, which is meshed with the drive bevel gear **426** at the linking shaft **42.**

The gearbox cover **51** has a detachable lid **52** corresponding to the drive bevel gear **426** at the linking shaft **42.** By means of the detachable arrangement of the detachable lid **52,** the maintenance engineer is easily accessible to the drive bevel gear **426.**

The receiving chamber **50** is in communication with a mounting hole **53,** which accommodates an actuation rod **54.** The actuation rod **54** has mounted on one end thereof a worm gear **55** meshed with a toothed portion **420** at one end of the linking shaft **42.** Therefore, the linking shaft **42** can rotate the actuation rod **54.** The actuation rod **54** has the other end connected to a mileage counter in an instrument board (not shown) through a cable **56.** Therefore, during rotary motion of the actuation rod **54,** the core **57** of the cable **56** is synchronously rotated to drive the mileage counter to count the speed and mileage of the motor vehicle.

Referring to FIG 3 again, a drive gear **461** is mounted on the gearshift lever **46** and meshed with a driven gear **453** at the gearshift hub **45.** When operating the gearshift lever **46** to move the gearshift hub **45** to the forward gearshift position, the first push rod **441** will move the first sliding block **434** into the coupling hole **4331** of the forward gear **433,** for enabling the engine driving force to be transferred from the transmission gear **411** at the driven shaft **41** to the transmission gear **431** at the main shaft **43** to rotate the main shaft **43.** At this time, the forward gear **433** will be changed from the idle-running status to the working status to rotate the forward gear **425,** the linking shaft **42,** the drive bevel gear **426,** the driven bevel gear **63** and the output shaft **62,** and to further rotate the rear wheels of the motor vehicle for forward movement (not shown).

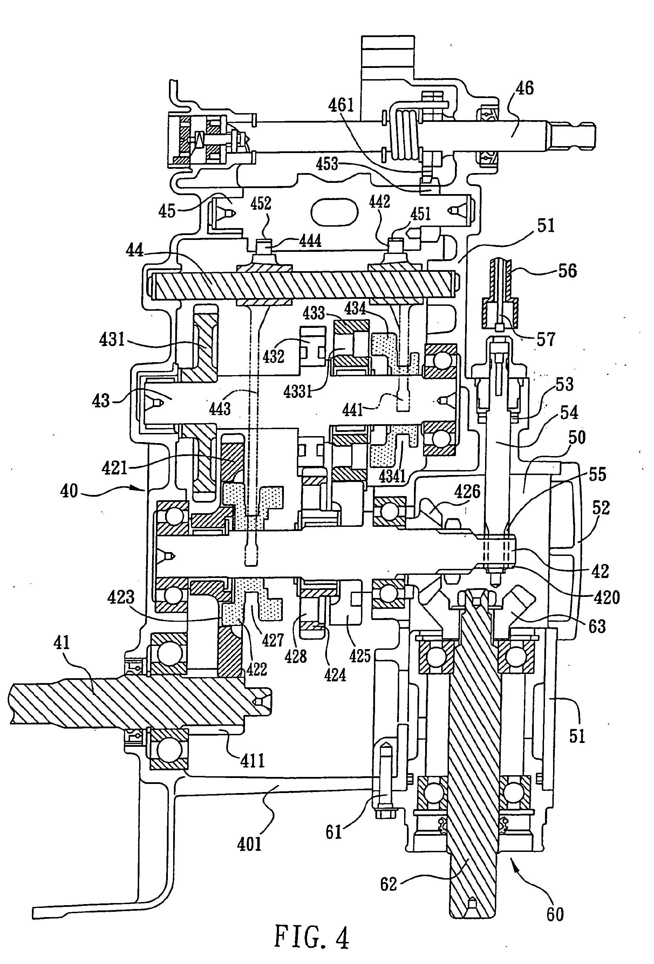

Referring to FIG 4, when operating the gearshift lever **46** to move the gearshift hub **45** to the backward gearshift position, the second push rod **443** will move the second sliding block **422** into the coupling hole **423** of the back gear **421,** for enabling the engine driving force to be transferred from the transmission gear **411** at the driven shaft **41** to the linking shaft **42.** At this time, the back gear **433** will be changed from the idle-running status to the working status to rotate the linking shaft **42,** the drive bevel gear **426,** the driven bevel gear **63** and the output shaft **62,** and to further rotate the rear wheels of the motor vehicle for backward movement (not shown).

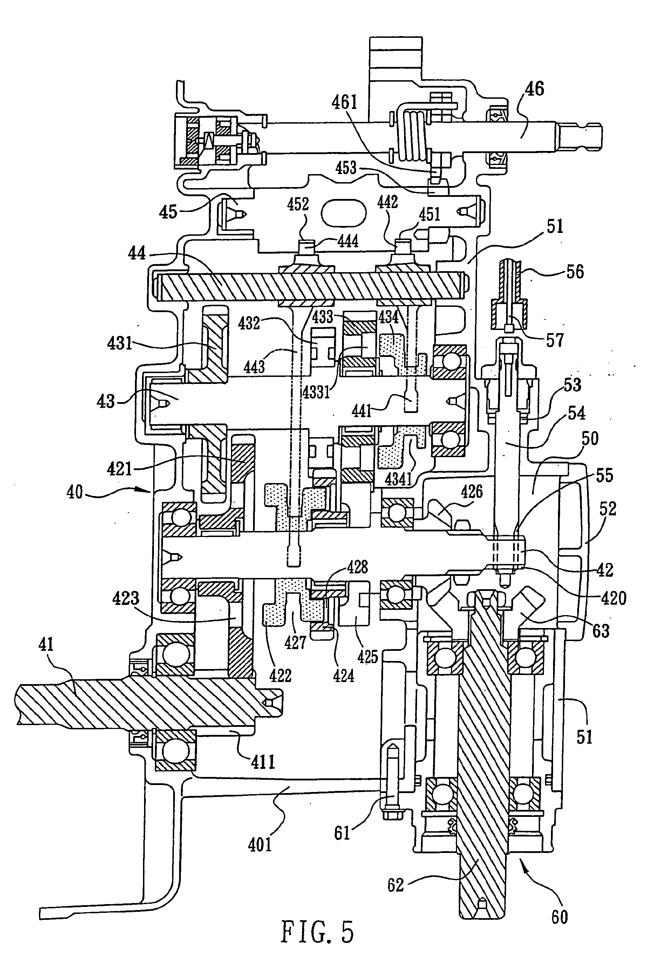

Referring to FIG 5, when operating the gearshift lever **46** to move the gearshift hub **45** to the forward gearshift low-range position, the second push rod **443** will move the second sliding block **422** into the coupling hole **428** of the low-range gear **424,** for enabling the engine driving force to be transferred from the transmission gear **411** at the driven shaft **41** to the transmission gear **431** at the main shaft **43** to rotate the main shaft **43.** At this time, the low-range gear **432** at the main shaft **43** will drive the low-range gear **424** to rotate the linking shaft **42,** the drive bevel gear **426,** the driven bevel gear **63** and the output shaft **62,** and to further rotate the rear wheels of the motor vehicle for low-range (low speed) high-torque forward movement (not shown).

Therefore, by means of the operation of the transmission gear **431** at the main shaft **43,** the low-range gear **432,** the forward gear **433,** the first sliding block **434,** the back ward **421** at the linking shaft **42,** the second sliding block **422,** the low-range gear **424,** the forward gear **425** and the drive bevel gear **426,** the driven bevel gear **63** at the output shaft **62** can be controlled to mesh with the drive bevel gear **426** at the linking shaft **42.** This arrangement eliminates the noise problem due to inaccurate engagement between gears as encountered in the prior art design. Further, the gearbox cover **51** provides a receiving chamber **50** for quick installation of the output shaft set **60** to eliminate the complicated installation procedure of the prior art design. Further, the design of the detachable lid **52** of the gearbox cover **51** enables the maintenance engineer to access to the drive bevel gear **426** at the linking shaft **42** easily. Further, the gearbox **40** provides a mounting hole **53** to accommodate the actuation rod **54,** for enabling the cable **56** to drive the mileage counter to count the speed and mileage of the motor vehicle.

Although the present invention has been explained in relation to its preferred embodiment, it is to be understood that many other possible modifications and variations can be made without departing from the spirit and scope of the invention as hereinafter claimed.

## Claims

1. A transmission gearbox for use in a motor vehicle comprising a gearshift hub, a first push rod, a second push rod, a first sliding block, a second sliding block, a driven shaft, a linking shaft, a main shaft, and an output shaft, said gearshift hub and said first push rod and said second push rod and said first sliding block and said second sliding block forming a gearshift shifting mechanism to transfer engine driving force from said driven shaft through said linking shaft and said main shaft to said output shaft, which is **characterized in that**:
said first sliding block is slidably mounted on said main shaft; said main shaft has mounted thereon a forward gear, a low-range gear, and a transmission gear; said second sliding block is slidably mounted on said linking shaft; said linking shaft has mounted thereon a back gear, a low-range gear, a forward gear, and a drive bevel gear, said back gear being mounted on said linking shaft at one side relative to said second sliding block, the low-range gear, forward gear and drive bevel gear at said linking shaft being disposed at one side relative to said second sliding block opposite to said back gear.

2. The transmission gearbox as claimed in claim 1, wherein said first sliding block has a toothed portion meshed with said main shaft for rotation with said main shaft.

3. The transmission gearbox as claimed in claim 1 or 2, wherein said d second sliding block has a toothed portion meshed with said liking shaft for rotation with said linking shaft.

4. The transmission gearbox as claimed in claim 1, 2 o r 3, wherein said output shaft has fixedly mounted theron a driven bevel gear meshed with said drive bevel gear at said linking shaft.

5. The transmission gearbox as claimed in claim 1,2, 3 or 4, wherein the low-range gear and forward gear at said main shaft are respectively meshed with the low-range gear and forward gear at said linking shaft.

6. A transmission gearbox for use in a motor vehicle comprising a box body covered with a gearbox cover to accommodate a driven shaft, a linking shaft, a main shaft, and an output shaft set for enabling engine driving force to be transferred from said driven shaft through said linking shaft and said main shaft to said output shaft set, which is **characterized in that**:
said linking shaft has mounted thereon a drive bevel gear; said gearbox cover defines therein a receiving chamber around said drive bevel gear and adapted to accommodate said output shaft set; said output shaft set comprises an output shaft and a driven bevel gear fixedly mounted on said output shaft and meshed with said drive bevel gear.

7. The transmission gearbox as claimed in claim 6, wherein said gearbox cover is provided with a detachable lid.

8. The transmission gearbox as claimed in claim 6 or 7, wherein said gearbox has a mounting hole disposed in communication with said receiving chamber and accommodating an actuation rod, sad actuation rod having a first end, a worm fixedly mounted on said first end and meshed with a toothed portion at one end of said linking shaft, and a second end connected to a mileage counter through a cable for driving said mileage counter to count upon rotary motion of said actuation rod with said linking shaft.

9. The transmission gearbox as claimed in claim 6, 7 or 7 wherein said output shaft set is affixed to said receiving chamber in said gearbox cover with a screw member.
